# EUROPÄISCHE PATENTSCHRIFT

(11) **EP 3 565 686 B1**
(45) Veröffentlichungstag und Bekanntmachung des Hinweises auf die Patenterteilung: **25.08.2021**
(21) Anmeldenummer: 17767824.0
(22) Anmeldetag: 14.09.2017
(51) Int. Cl.: B23K 26/00, B23K 26/10, B23K 26/352

(54) **LASERWERKZEUG MIT HOHLWELLENANTRIEB UND NICHT-ROTIERENDER LINSE ; VERFAHREN ZUR EINSTELLEN DER FOKUSLAGE VON LASERSTRAHLEN IN EINEM SOLCHEN LASERWERKZEUG**
LASER TOOL HAVING A HOLLOW SHAFT DRIVE AND NON-ROTATING LENS; METHOD FOR SETTING THE FOCAL POSITION OF THE LASER BEAMS IN SUCH A LASER TOOL
OUTIL LASER AVEC ENTRAÎNEMENT À ARBRE CREUX ET LENTILLE NON-ROTATIVE ; PROCÉDÉ POUR RÉGLER LA POSITION FOCALE DES RAYONS LASER DANS UN TEL OUTIL LASER

(30) Priorität: 05.01.2017 DE 102017200080
(43) Veröffentlichungstag der Anmeldung: 13.11.2019
(73) Patentinhaber: Volkswagen Aktiengesellschaft, 38440 Wolfsburg (DE)
(72) Erfinder: WEHRENDT, Christian, 38126 Braunschweig (DE)
(86) Internationale Anmeldenummer: PCT/EP2017/073188
(87) Internationale Veröffentlichungsnummer: WO 2018/127306

(56) Entgegenhaltungen:
- DE-A1- 19 809 367
- DE-U1- 29 506 005
- JP-A- S6 163 387
- US-A1- 2016 339 541

## Beschreibung

Die Erfindung betrifft ein Laserwerkzeug, insbesondere für die Strukturierung von Zylinderlaufflächen, mit einer festen Linse und einer mittels Hohlwellenantrieb angetriebenen unabhängig von der Linse rotierbaren Spindel, und ein Verfahren zur Einstellung der Fokuslage von Laserstrahlen in einem solchen Laserwerkzeug.

### Stand der Technik

In der Kraftfahrzeugtechnik werden zur Bearbeitung und zur Strukturierung von Werkstückoberflächen Laserwerkzeuge verwendet. Insbesondere kommen Laserwerkzeuge bei der Einbringung kleiner Strukturen auf Zylinderlaufflächen zum Einsatz. In nach dem Stand der Technik bekannten Laserwerkzeugen wird ein in einer Laserquelle erzeugter Laserstrahl über eine Aneinanderreihung von optischen Elementen auf die Werkstoffoberfläche geführt, wobei der Laserstrahl über eine drehbare Vorrichtung rotiert wird. Ausschlaggebend für ein optimales Bearbeitungsergebnis ist dabei die korrekte Position des Fokus des Laserstrahls, welche möglichst genau und reproduzierbar einstellbar sein sollte. Einfluss auf die Fokuslage hat dabei die Führung des Laserstrahls in den optischen Elementen des Laserwerkzeugs, welche möglichst genau im Strahlengang positioniert sein sollten. Insbesondere ist es dabei von Vorteil, wenn die optischen Komponenten unabhängig von der Spindel bewegbar sind.

Aus der DE 10 2008 015 403 A1 ist ein Laserstrahlwerkzeug zum Feinbearbeiten einer Innenoberfläche einer Werkstückbohrung, insbesondere einer Zylinderlauffläche, bekannt, wobei das Laserstrahlwerkzeug an einer rotierbaren und insbesondere heb- und senkbaren hohlen Maschinenspindel angebracht ist, und wobei eine Optikeinrichtung zum Umlenken des Laserstrahls auf der Werkstückoberfläche relativ zur Maschinenspindel verstellbar ist, sodass der Laserstrahl unabhängig von der Bewegung der Maschinenspindel bewegbar ist. Dabei ist insbesondere vorgesehen, dass mit Hilfe der Verstelleinrichtung eine der Rotationsbewegungen der Maschinenspindel entgegengesetzte Rotationsbewegung der Optikeinrichtung überlagert werden kann. Dadurch sollen Wechselwirkungszeiten zwischen dem Laserstrahl und einer zu bearbeitenden Werkstoffoberfläche verlängert werden, sodass das Einbringen von freien Strukturen ermöglicht wird.

Aus der DE 198 09 367 A1 (Basis des Oberbegriffes des Anspruchs 1) ist ein Präzisionsbearbeitungsverfahren unter Verwendung eines Strahls, z.B. eines Lasers, zur diskontinuierlichen Bearbeitung der Werkstückoberfläche bekannt, um einzelne Aussparungen in dieser Oberfläche an unregelmäßig beabstandeten Punkten während der Drehung des bearbeiteten Werkstücks um seine Längsachse auszubilden.

Ferner ist aus der DE 295 06 005 U1 eine Einrichtung zur Feinbearbeitung der Oberfläche von Werkstückbohrungen mit einem Laserstrahlwerkzeug bekannt, aufweisend ein verstellbares Optikteil in einem Tubus, der innerhalb der Maschinenspindel berührungslos geführt ist, so dass bei der Rotation der Maschinenspindel und bei der Längsverschiebung des Tubus keine Reibkräfte zu überwinden sind. Die Verstellvorrichtung ist bevorzugt als NC-gesteuerte Positioniereinrichtung ausgebildet, der ein NC-Speicher zugeordnet ist.

Die US 2016/339541 A1 offenbart einen Laserbearbeitungskopf zum Bearbeiten eines Werkstücks mit einem Laserstrahl, mit einer montierbaren, strahlformenden Optik, die in Längsrichtung des Laserstrahls verschiebbar montiert ist. Um eine Verschmutzung der Optik weitgehend zu vermeiden und um die Optik auch bei hohen Trägheitskräften durch höhere Beschleunigungen in ihrer eingestellten Position sicher zu halten, ist ein Riementrieb zum Verschieben der Optik vorgesehen.

### Darstellung der Erfindung: Aufgabe, Lösung, Vorteile

Der Erfindung liegt die Aufgabe zugrunde, ein Laserwerkzeug bereitzustellen, welches die Möglichkeit bietet, den Laserstrahl eines Laserwerkzeugs prozesssicher zu führen. Diese Aufgabe wird durch die Vorrichtung mit den in Anspruch 1 und das Verfahren mit den in Anspruch 7 angegebenen Merkmalen gelöst.

Die Erfindung sieht ein Laserwerkzeug, insbesondere für die Strukturierung von Zylinderlaufflächen gemäß Anspruch 1 vor, welches eine Laserquelle zur Erzeugung von Laserstrahlen, welche durch einen einer Hohlwelle befindliches Linsenrohr geführt werden, aufweist, wobei an dem Linsenrohr eine Linse befestigt ist, durch welche die Laserstrahlen geführt werden, wobei die Hohlwelle rotierbar als Hohlwellenmotor ausgeführt ist, wobei an der Hohlwelle eine Spindel befestigt ist, an welcher eine optische Vorrichtung zum Umlenken der Laserstrahlen auf eine Werkstückoberfläche befestigt ist, wobei die Hohlwelle unabhängig von der Linse rotierbar ist.

Dadurch, dass die Linse nicht an der Spindel oder der Hohlwelle befestigt ist und somit nicht deren Rotation folgt, wird die Prozessgenauigkeit erhöht, sodass ein Verschieben des Laserfokus, welches durch die Rotation der Linse hervorgerufen wird, vermieden wird. Dazu wird die Linse vorteilhaft in der Hohlwelle angeordnet, sodass die Hohlwelle um die Linse herum rotieren kann.

Erfindungsgemäß ist die Linse an dem Linsenrohr befestigt, wobei das Linsenrohr am Kollimator befestigt wird. Damit bilden die Linse, das Linsenrohr und der Kollimator eine Einheit, die mittels des Antriebs parallel zum Laserstrahl bewegt werden kann und somit zur Einstellung der Fokuslage des Laserstrahls dient. Dadurch, dass in dieser Anordnung der Kollimator und die Linse fest zueinander angeordnet sind, wird die Laserstrahlführung optimiert und eine genauere Positionierung des Laserfokus ermöglicht.

Des Weiteren ist vorgesehen, dass das Laserwerkzeug eine Regelungseinheit aufweist, welche die Bewegung des Kollimators in Abhängigkeit von einem Signal eines Sensors regelt. Ein solcher Sensor könnte beispielsweise die Intensität des Laserspots messen und mit einem Sollwert oder einem Schwellenwert vergleichen. Bei Überschreiten oder Unterschreiten eines solchen Sollwerts oder Schwellenwerts regelt der Antrieb automatisch die Position des Kollimators und damit die Lage des Laserstrahlfokus nach. Dies hat zur Folge, dass die Oberfläche eine bessere Oberflächenstruktur gemäß der vorgewählten Parameter aufweist. Zudem steigt die Wirtschaftlichkeit des Systems, da die Intensität der Laserquelle den Umgebungseinflüssen angepasst werden kann und das System fortlaufend kalibriert wird.

Erfindungsgemäß ist vorgesehen, dass das Laserwerkzeug einen im Strahlengang hinter der Laserquelle angeordneten Kollimator aufweist, welcher mittels eines Antriebs parallel zum Laserstrahl bewegbar ist.

Durch die Bewegung des Kollimators mit Hilfe eines Antriebs entlang der Richtung des Laserstrahls ist es auf vorteilhafte Weise möglich, die Lage des Fokus des Laserstrahls anzupassen, ohne dass der manuelle Einfluss eines Bedieners nötig ist. Zudem wird der Kollimator stabil im Strahlengang geführt.

Erfindungsgemäß ist vorgesehen, dass das Laserwerkzeug mindestens einen unteren Anschlag aufweist, der die Bewegung des Kollimators in Richtung der optischen Vorrichtung begrenzt. Zudem ist gemäß einer weiteren Ausführung vorgesehen, dass das Laserwerkzeug mindestens einen oberen Anschlag aufweist, der die Bewegung des Kollimators in Richtung der Laserquelle begrenzt.

Erfindungsgemäß ist die optische Vorrichtung ein Umlenkprisma oder ein Spiegel. Dieses ist an einem der Laserquelle abgewandten Ende der Spindel befestigt und rotiert somit mit der Spindel, um durch die Rotation die Werkstoffoberfläche abzufahren. Das Umlenkprisma oder der Spiegel ist in einem Halter, welcher mit der Spindel verbunden ist, mittels mehrerer Schrauben verschraubt. Es sind jedoch auch andere optische Elemente, welche zur Umlenkung eines Laserstrahls ausgebildet sind, denkbar, beispielweise ein Spiegel.

Zweckmäßige Ausgestaltungen der Erfindung sind in den Unteransprüchen gekennzeichnet.

Gemäß einer zweckmäßigen Weiterbildung ist der Antrieb ein elektrischer Antrieb, ein pneumatischer Antrieb, oder ein hydraulischer Antrieb. Besonders bevorzugt ist der Antrieb ein Stellmotor.

Gemäß einer vorteilhaften Ausführung verfügt der Antrieb über ein Längenmesssystem als externen Positionsgeber zur Erfassung der Position des Kollimators. Die Bewegung des Kollimators parallel zur Richtung des Laserstrahls kann beispielsweise über einen Kugelgewindetrieb erfolgen. Das Längenmesssystem ist mit dem Antrieb verbunden oder in den Antrieb integriert.

Gemäß einer weiteren vorteilhaften Ausführung weist der Antrieb eine Steuervorrichtung zur Steuerung der Bewegung des Kollimators auf. Anhand mindestens eines vorgebbaren Parameters kann die Bewegung des Kollimators somit gesteuert werden. Die Steuervorrichtung verarbeitet darüber hinaus die Signale des Längenmesssystems.

Dadurch, dass die Bewegung des Kollimators durch vorgebbare Parameter gesteuert wird, erhöht sich die Prozesssicherheit und die Wiederholgenauigkeit auf vorteilhafte Weise. Darüber hinaus lässt sich die Fokuslage besonders präzise für unterschiedliche Zylinderdurchmesser einstellen. Es ist insbesondere möglich, die Parameter für unterschiedliche Zylinderdurchmesser in einem in der Steuerung vorgesehenen Speicher zu hinterlegen, sodass diese direkt während des Betriebs ohne manuelles Umrüsten abgerufen werden können.

Gemäß einer weiteren Ausführungsform kann der mindestens eine Parameter der Vorschub des Kollimators in Richtung der optischen Vorrichtung oder der Vorschub des Kollimators in Richtung der Laserquelle sein. Dabei bedeutet ein Vorschub des Kollimators in Richtung der optischen Vorrichtung ein Vorrücken des Fokus in Richtung der Werkstoffoberfläche, und analog bedeutet ein Vorschub des Kollimators in Richtung der Laserquelle ein Abrücken des Fokus von der Werkstückoberfläche.

Darüber hinaus betrifft die Erfindung ein Verfahren zur Einstellung der Fokuslage von Laserstrahlen in einem Laserwerkzeug gemäß der vorliegenden Erfindung. Das Laserwerkzeug weist eine Laserquelle zur Erzeugung der Laserstrahlen und einen Kollimator zur Erzeugung eines parallelen Strahlverlaufs der Laserstrahlen auf. Der Laserstrahl wird durch eine Linse geführt, wobei die Linse innerhalb einer rotierbaren Spindel angeordnet ist. Anschließend wird der Laserstrahl durch eine optische Vorrichtung geführt, welche sich an einem der Laserquelle angewandten Ende der Spindel befindet und die Laserstrahlen auf eine Werkstoffoberfläche umlenkt. Der Kollimator ist mittels eines Antriebs parallel zum Laserstrahl bewegbar und mittels einer Steuerung, welche die Bewegung des Kollimators steuert, wird mindestens ein Parameter vorgegeben, wobei in Abhängigkeit von dem mindestens einen Parameter der Kollimator in Richtung der optischen Vorrichtung oder entgegen der Richtung der optischen Vorrichtung bewegt wird.

Gemäß einer vorteilhaften Ausgestaltung des Verfahrens ist der mindestens eine Parameter der Vorschub des Kollimators in Richtung der optischen Vorrichtung oder der Vorschub des Kollimators in Richtung der Laserquelle.

Weiterhin ist gemäß einer vorteilhaften Ausgestaltung des Verfahrens vorgesehen, dass die Linse feststehend in einem Linsenrohr angeordnet ist, welches am Kollimator befestigt ist, sodass die Linse der Bewegung des Kollimators folgt.

### Kurze Beschreibung der Zeichnungen

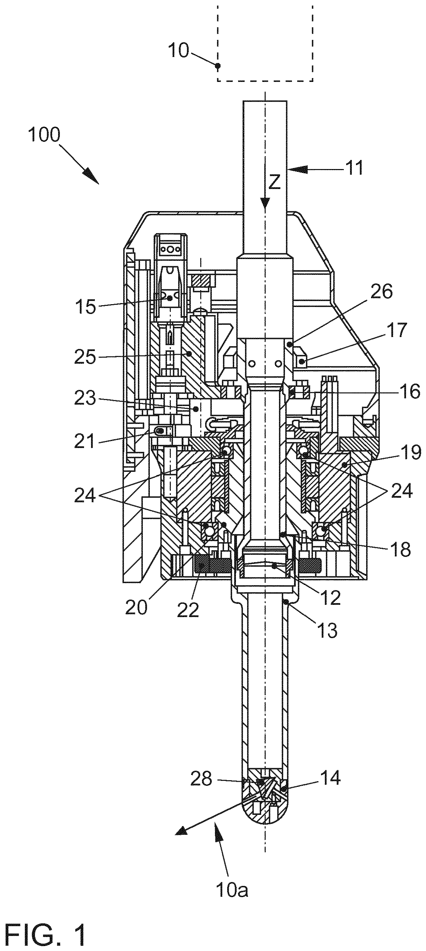

Ein Ausführungsbeispiel der Erfindung wird nachstehend anhand der Zeichnungen näher erläutert. Es zeigt
- Figur 1: eine Querschnittsdarstellung des Laserwerkzeuges.

### Bevorzugte Ausführungsformen der Erfindung

Figur 1 zeigt das Laserwerkzeug (100) in einer Querschnittdarstellung. Die Faser der Laserquelle (10) wird über den Kollimator (11) mit dem Laserwerkzeug (100) verbunden. Der Kollimator (11) ist an einer feststehenden Hülse (26) befestigt, welche über einen Verstellwinkel (25) mit dem Antrieb (15) verbunden ist. Der Antrieb (15) verfährt entlang einer Führungswelle (23) mittels einer Kugelumlaufspindel (21). An der Hülse (26) ist ebenfalls ein Linsenrohr (18) befestigt, an dessen einen Ende, welches der Hülse (26) abgewandt ist, die Linse (12) befestigt ist. Der Strahlenverlauf des Laserstrahls (10a) aus der Laserquelle (10) erstreckt sich dabei durch den Kollimator (11), die Hülse (26), das Linsenrohr (18) und die Linse (12) hin zu einer optischen Vorrichtung (14).

Die Einheit bestehend aus Laserquelle (10), Kollimator (11), Hülse (26), Linsenrohr (18) und Linse (12) ist über den Verstellwinkel (25) mit dem Antrieb (15) verbunden und lässt sich so als Einheit parallel zum Laserstrahl bewegen. Die Bewegung dieser Fokussiereinheit wird begrenzt durch einen oberen Anschlag (17) und einen unteren Anschlag (16).

Das Laserwerkzeug (100) weist zudem eine in der Zeichnung nicht näher dargestellte Steuervorrichtung zur Steuerung der Bewegung des Kollimators (11) auf. Zur Steuerung der Bewegung des Kollimators (11) sind ein oder mehrere Parameter vorgebbar, so kann beispielsweise der Vorschub des Kollimators (11) in Richtung der optischen Vorrichtung (14) oder der Vorschub des Kollimators in Richtung der Laserquelle (10) vorgegeben werden. Zudem weist das Laserwerkzeug (100) eine nicht näher dargestellte Regelungseinheit auf, welche die Bewegung des Kollimators (11) und damit die Fokuslage in Abhängigkeit in einem Signal, welches beispielsweise von einem Sensor stammt, im Prozess regelt und das System bezüglich der Fokuslage kalibriert.

Zur Rotation des Laserstrahls weist das Laserwerkzeug (100) eine Spindel (13) auf, welche an der Hohlwelle (20) eines Hohlwellenmotors (19) befestigt ist, und durch diesen Hohlwellenmotor (19) angetrieben wird. Dabei sind das Linsenrohr (18) und die Linse (12) innerhalb der Hohlwelle (20) angeordnet. Alle Komponenten des Hohlwellenmotors (19) sind über Lager (24) gelagert.

An dem Ende der Spindel (13), welches dem Hohlwellenmotor (19) abgewandt ist, ist die optische Vorrichtung (14) befestigt. Die optische Vorrichtung (14) rotiert zusammen mit der Spindel (13). Die optische Vorrichtung (14) umfasst ein Umlenkprisma (28), welches den Laserstrahl (10a) auf die Werkstückoberfläche (30) umlenkt. Im Bereich der Spindel ist darüber hinaus ein Geber (22) mit Lesekopf angeordnet, welcher die Position der Spindel, und damit des Laserstrahls (10a), überprüft.

### Bezugszeichenliste

- 100: Laserwerkzeug
- 10: Laserquelle
- 10a: Laserstrahl
- 11: Kollimator
- 12: Linse
- 13: Spindel
- 14: optische Vorrichtung
- 15: Antrieb
- 16: unterer Anschlag
- 17: oberer Anschlag
- 18: Linsenrohr
- 19: Hohlwellenmotor
- 20: Hohlwelle
- 21: Kugelumlaufspindel
- 22: Geber
- 23: Führungswelle
- 24: Lager
- 25: Verstellwinkel
- 26: Hülse
- 28: Umlenkprisma/Spiegel
- 30: Werkstückoberfläche

## Patentansprüche

1. Laserwerkzeug (100), insbesondere für die Strukturierung von Zylinderlaufflächen, aufweisend eine Laserquelle (10) zur Erzeugung von Laserstrahlen (10a), welche durch ein in einer Hohlwelle (20) befindliches Linsenrohr (18) geführt wird, wobei an dem Linsenrohr (18) eine Linse (12) befestigt ist, durch welche die Laserstrahlen (10a) geführt werden, wobei die Hohlwelle (20) rotierbar als Hohlwellenmotor (19) ausgeführt ist, wobei an der Hohlwelle (20) eine Spindel (13) befestigt ist, an welcher eine optische Vorrichtung (14) zum Umlenken des Laserstrahls (10a) auf eine Werkstückoberfläche (30) befestigt ist,
**dadurch gekennzeichnet, dass**
die Hohlwelle (20) unabhängig von der Linse (12) rotierbar ist, wobei das Laserwerkzeug (100) einen im Strahlengang hinter der Laserquelle (10) angeordneten Kollimator (11) aufweist, welcher mittels eines Antriebs (15) parallel zum Laserstrahl (10a) bewegbar ist, wobei der Kollimator (11) mit dem Linsenrohr (18) verbunden ist, wobei das Laserwerkzeug (100) mindestens einen unteren Anschlag (16) und/oder einen oberen Anschlag (17) aufweist, welche die Bewegung des Kollimators (11) begrenzen, und die optische Vorrichtung (14) ein Umlenkprisma oder ein Spiegel (28) ist, und, dass das Laserwerkzeug (100) einen Sensor und eine Regelungseinheit aufweist, welche die Bewegung des Kollimators (11) in Abhängigkeit von einem Signal des Sensors des Laserwerkzeugs (100) regelt, wobei mittels des Sensors die Intensität des Laserspots messbar ist.

2. Laserwerkzeug (100) nach Anspruch 1, **dadurch gekennzeichnet, dass** der Antrieb (15) eine elektrischer Antrieb, insbesondere ein Stellmotor, ein hydraulischer Antrieb oder ein pneumatischer Antrieb ist.

3. Laserwerkzeug (100) nach einem der vorhergehenden Ansprüche, **dadurch gekennzeichnet, dass** der Antrieb (15) einen externen Positionsgeber aufweist.

4. Laserwerkzeug (100) nach einem der vorhergehenden Ansprüche, **dadurch gekennzeichnet, dass** der Antrieb (15) eine Steuervorrichtung zur Steuerung der Bewegung des Kollimators (11) anhand mindestens einem vorgebbaren Parameter aufweist.

5. Laserwerkzeug (100) nach einem der vorhergehenden Ansprüche, **dadurch gekennzeichnet, dass** der mindestens eine Parameter der Vorschub des Kollimators (11) in Richtung des optische Vorrichtung (14) oder der Vorschub des Kollimators in Richtung der Laserquelle (10) ist.

6. Verfahren zur Einstellung der Fokuslage von Laserstrahlen (10a) in einem Laserwerkzeug (100) nach Anspruch 1 wobei mittels der Regelungseinheit in Abhängigkeit der gemessenen Intensität des Laserspots der Kollimator (11) in Richtung der optischen Vorrichtung (14) oder entgegen der Richtung der optischen Vorrichtung (14) bewegt wird.

7. Verfahren nach Anspruch 6, wobei der der mindestens eine Parameter der Vorschub
des Kollimators (11) in Richtung der optischen Vorrichtung (14) oder der Vorschub des Kollimators (11) in Richtung der Laserquelle (10) ist.

8. Verfahren nach Anspruch 6 oder 7, wobei die Linse (12) feststehend in einem Linsenrohr (18) angeordnet ist, welches am Kollimator (11) befestigt ist.

## Claims

1. Laser tool (100), in particular for structuring cylinder running surfaces, having a laser source (10) for generating laser beams (10a), which is guided through a lens tube (18) which is located in a hollow shaft (20), wherein a lens (12), through which the laser beams (10a) are guided, is attached to the lens tube (18), wherein the hollow shaft (20) is embodied to be rotatable as a hollow shaft motor (19), wherein a spindle (13), to which an optical apparatus (14) for deflecting the laser beam (10a) onto a workpiece surface (30) is attached, is attached to the hollow shaft (20),
**characterized in that**
the hollow shaft (20) is rotatable independently of the lens (12), wherein the laser tool (100) has, arranged in the beam path downstream of the laser source (10), a collimator (11) that is movable parallel to the laser beam (10a) by means of a drive (15), wherein the collimator (11) is connected to the lens tube (18), wherein the laser tool (100) has at least one lower stop (16) and/or one upper stop (17) delimiting the movement of the collimator (11), and the optical apparatus (14) is a deflection prism or a mirror (28), and
**in that** the laser tool (100) has a sensor and a closed-loop control unit controlling the movement of the collimator (11) in dependence on a signal of the sensor of the laser tool (100), wherein the intensity of the laser spot is measurable by means of the sensor.

2. Laser tool (100) according to Claim 1, **characterized in that** the drive (15) is an electrical drive, in particular an actuator, a hydraulic drive or a pneumatic drive.

3. Laser tool (100) according to either of the preceding claims, **characterized in that** the drive (15) has an external position sensor.

4. Laser tool (100) according to one of the preceding claims, **characterized in that** the drive (15) has a control apparatus for controlling the movement of the collimator (11) on the basis of at least one predefinable parameter.

5. Laser tool (100) according to one of the preceding claims, **characterized in that** the at least one parameter is the feed movement of the collimator (11) in the direction of the optical apparatus (14) or the feed movement of the collimator in the direction of the laser source (10).

6. Method for setting the focal position of laser beams (10a) in a laser tool (100) according to Claim 1, wherein the collimator (11) is moved in the direction of the optical apparatus (14) or counter to the direction of the optical apparatus (14) by means of the closed-loop control unit in dependence on the measured intensity of the laser spot.

7. Method according to Claim 6, wherein the at least one parameter is the feed movement of the collimator (11) in the direction of the optical apparatus (14) or the feed movement of the collimator (11) in the direction of the laser source (10).

8. Method according to Claim 6 or 7, wherein the lens (12) is arranged fixedly in a lens tube (18), which is attached to the collimator (11).

## Revendications

1. Outil laser (100), destiné en particulier à structurer des surfaces de glissement de cylindre, ledit outil comportant une source laser (10) qui est destinée à générer des faisceaux laser (10a) et qui est guidée à travers un tube de lentille (18) situé dans un arbre creux (20), une lentille (12) étant fixée au tube de lentille (18) et traversée par les faisceaux laser (10a), l'arbre creux (20) étant conçu pour pouvoir tourner comme un moteur d'arbre creux (19), une broche (13) étant fixée à l'arbre creux (20) et un dispositif optique (14) destiné à dévier le faisceau laser (10a) sur une surface de pièce (30) étant fixé à ladite broche,
**caractérisé en ce que**
l'arbre creux (20) peut tourner indépendamment de la lentille (12), l'outil laser (100) comportant un collimateur (11) qui est disposé dans le trajet de faisceau en arrière de la source laser (10) et qui peut être déplacé parallèlement au faisceau laser (10a) au moyen d'un entraînement (15), le collimateur (11) étant relié au tube de lentille (18), l'outil laser (100) comportant au moins une butée inférieure (16) et/ou une butée supérieure (17), lesquelles limitent le déplacement du collimateur (11), et le dispositif optique (14) étant un prisme déflecteur ou un miroir (28), et
l'outil laser (100) comporte un capteur et une unité de régulation qui régule le déplacement du collimateur (11) en fonction d'un signal du capteur de l'outil laser (100), l'intensité du spot laser pouvant être mesurée au moyen du capteur.

2. Outil laser (100) selon la revendication 1, **caractérisé en ce que** l'entraînement (15) est un entraînement électrique, notamment un servomoteur, un entraînement hydraulique ou un entraînement pneumatique.

3. Outil laser (100) selon l'une des revendications précédentes, **caractérisé en ce que** l'entraînement (15) comporte un codeur de position externe.

4. Outil laser (100) selon l'une des revendications précédentes, **caractérisé en ce que** l'entraînement (15) comporte un dispositif de commande destiné à commander le déplacement du collimateur (11) en fonction d'au moins un paramètre spécifiable.

5. Outil laser (100) selon l'une des revendications précédentes, **caractérisé en ce que** l'au moins un paramètre est l'avance du collimateur (11) en direction du dispositif optique (14) ou l'avance du collimateur en direction de la source laser (10).

6. Procédé de réglage de la position de focalisation de faisceaux laser (10a) dans un outil laser (100) selon la revendication 1, le collimateur (11) étant déplacé en direction du dispositif optique (14) ou à l'opposé du dispositif optique (14) au moyen de l'unité de commande en fonction de l'intensité mesurée du spot laser.

7. Procédé selon la revendication 6, l'au moins un paramètre étant l'avance du collimateur (11) en direction du dispositif optique (14) ou l'avance du collimateur (11) en direction de la source laser (10).

8. Procédé selon la revendication 6 ou 7, la lentille (12) étant disposée de manière fixe dans un tube de lentille (18) qui est fixé au collimateur (11).
